# EUROPÄISCHE PATENTANMELDUNG

(11) **EP 4 783 054 A1**
(43) Veröffentlichungstag der Anmeldung: **29.07.2026**
(21) Anmeldenummer: 25153779.1
(22) Anmeldetag: 24.01.2025
(51) Int. Cl.: G06F 21/75, G06F 21/76

(54) **VERFAHREN ZUR ERZEUGUNG EINES ELEKTRONISCHEN BAUTEILS MIT VERBESSERTER ABHÖRSICHERHEIT, UND BAUTEIL**

(71) Anmelder: Siemens Aktiengesellschaft, 80333 München (DE)
(72) Erfinder: Hinterstoisser, Thomas, 2102 Bisamberg (AT); Cech, Christian, 2483 Ebreichsdorf (AT); Chilku, Bekim, 1150 Wien (AT); Fischer, Bernhard, 2122 Wolkersdorf im Weinviertel (AT)
(74) Vertreter: Siemens Patent Attorneys

(57) **Zusammenfassung**

Verfahren zur Erzeugung eines elektronischen FPGA-Bauteils (FPGA) mit verbesserter Abhörsicherheit, wobei folgende Schritte ausgeführt werden:
a) Bereitstellen einer Funktions-Beschreibung für einen elektronischen Schaltkreis auf dem elektronischen FPGA-Bauteil (FPGA),
b) Erzeugen einer ersten Konfiguration für das elektronische FPGA-Bauteil (FPGA) aus der Funktions-Beschreibung, welcher auf programmierbaren Look-Up-Tables, LUTs, (LUT1, LUT2) aufbaut,
c) Bestimmen des zeitlichen Verlaufs einer ersten Stromaufnahme (I_{LUT}) der ersten Konfiguration über eine vorgegebene Betriebsdauer des elektronischen Schaltkreises,
d) Erzeugen einer zweiten Konfiguration für das elektronische FPGA-Bauteil (FPGA), welche auf LUTs aufbaut, wobei die zweite Konfiguration konfiguriert ist, einen zeitlichen Verlauf einer zweite Stromaufnahme (I_{LUTk}) zu erzeugen, welche über den zeitlichen Verlauf zur ersten Stromaufnahme (I_{LUT}) der ersten Konfiguration über die vorgegebene Betriebsdauer des elektronischen Schaltkreises komplementär ist, und die Summe über die erste und zweite Stromaufnahme (I_{LUT}, I_{LUTk}) über die vorgegebene Betriebsdauer des elektronischen Schaltkreises in den jeweiligen einzelnen Stromwerten in deren zeitlichen Verlauf konstant ist.
e) Erzeugen des elektronischen Schaltkreises auf dem elektronischen FPGA-Bauteil (FPGA), umfassend die erste und die zweite Konfiguration.

## Beschreibung

Die Erfindung betrifft Verfahren zur Erzeugung eines elektronischen Bauteils mit verbesserter Abhörsicherheit, und ein entsprechendes elektronischen Bauteil.

Eine "Differential Power Analysis" (kurz DPA) ist ein Seitenkanalangriff in einem elektronischen System, beispielsweise einer Halbleiterschaltung, bei dem Stromverbrauchsmessungen eines kryptographischen Systems statistisch analysiert werden, um Zugriff auf das System zu erhalten.

Der solcher Angriff nutzt den unterschiedlichen Stromverbrauch elektronischen Schaltungen, wie Mikroprozessoren oder anderer Hardware aus, während Vorgänge mit geheimen Schlüsseln ausgeführt werden.

Um eine möglichst genaue DPA durchführen zu können, werden rauschfreie Signalaufzeichnungen von unterschiedlichen Vorgängen benötigt.

Der Rauschanteil kann durch mehrere Messungen desselben Vorgangs mit Hilfe von signalverarbeitenden und fehlerkorrigierenden Algorithmen ausgemittelt werden.

Durch Differenzbildungen von genügend vielen kryptographischen Vorgängen mit unterschiedlichen Datensätzen lässt sich selbst die kleinste Korrelation erkennen, anhand welcher datenabhängige Zusammenhänge oder geheime Schlüssel aus der Hardware extrahiert werden können.

Im Laufe der Jahre wurden zahlreiche Angriffe mit DPA veröffentlicht.

Eine Methode besteht beispielsweise darin, das Signal-Rausch-Verhältnis zu verringern, denn je niedriger dieses Verhältnis, desto mehr Messungen sind für einen Angriff erforderlich.

Zeitliche auftretendes Rauschen kann in das Schaltungs-Design beispielsweise durch eine Variation von Signal- oder System-Takten, oder die Anwendung zufälliger Wartezustände, oder auch durch die Verwendung von zufälligen Daten oder Dummy-Operationen.

Eine andere Methode besteht darin, die für einen bestimmten Datenwert oder Vorgang verbrauchte Energiemenge auszugleichen.

Dies kann mit komplementären Schaltkreisen oder mithilfe eines Codes mit konstantem Gewicht erreicht werden, denn ein Ausgleich des Stromverbrauchs würde die Amplitude der Differenzkurve verringern.

Im ASIC-Bereich gibt es die Möglichkeit auf logische Elemente mit konstanter Stromaufnahme zurückzugreifen, im FPGA-Bereich hingegen sind die logischen Elemente fest vorgegeben und begrenzt.

Ein "Field Programmable Gate Array", kurz FPGA, ist ein integrierter digitaler Schaltkreis, in welchen eine logische Schaltung geladen und programmiert werden kann.

Anders als bei der Programmierung von Computern, Mikrocontrollern oder Steuerungen bezieht sich hier der Begriff Programmierung nicht nur auf die Vorgabe zeitlicher Abläufe, sondern vor allem auch auf die Definition der gewünschten Schaltungsstruktur.

Diese wird mittels einer Hardwarebeschreibungssprache formuliert und von einer Erzeugersoftware in eine Konfigurationsdatei übersetzt, welche vorgibt, wie die physischen Elemente im FPGA verschaltet werden sollen.

Man spricht daher auch von der Konfiguration des FPGA, ohne diese der Baustein keine Funktion hat.

Die wesensbestimmende Grundstruktur eines FPGA ist ein Feld aus Basis-Blöcken oder BasisElementen mit jeweils einer einfachen programmierbaren Lookup-Tabelle (kurz LUT) und einem 1-Bit-Register (Flipflop).

Die LUTs können, je nach Anzahl der verfügbaren Eingänge, jede beliebige n-stellige Binärfunktion realisieren.

Die Programmierung der gewünschten Funktion erfolgt durch die Hinterlegung der definierenden Wahrheitstabelle in den SRAM-Zellen der LUT, die Funktionsberechnung durch das Auslesen der durch die Eingänge bestimmten Speicheradresse.

Neben den LUTs ist auf einem FPGA auch die Verschaltung der Komponenten weitgehend frei konfigurierbar.

Multiplexer-Strukturen in den Basisblöcken ermöglichen häufig sehr schnelle lokale Signalpfade, zur Einbindung oder Umgehung des Flipflops, zur Rückkopplung von dessen Ausgang, zur Verbindung von Nachbarblöcken und ähnlichem.

Für die ferneren Verbindungen liegt zwischen den Basisblöcken ein Gitter aus Busstrukturen, an das Ein- und Ausgänge angeschlossen werden können.

Weitere programmierbare Schaltkomponenten in den Kreuzungspunkten des Gitters erlauben die Signalverteilung über den gesamten Chip.

Es ist daher Aufgabe der Erfindung eine Lösung bereitzustellen, bei welcher eine zusätzliche Härtung von elektronischen FPGA-Schaltungen erfolgt, um eine effektive Maßnahme gegen DPA-Angriffe zu erhalten beziehungsweise um ein unerwünschtes Abhören von Signalen auf dem FPGA Halbleiter-Bauteil zu erschweren.

Die erfindungsgemäße Aufgabe wird durch ein Verfahren zur Erzeugung eines elektronischen FPGA-Bauteils mit verbesserter Abhörsicherheit gelöst, wobei folgende Schritte ausgeführt werden:
a) Bereitstellen einer Funktions-Beschreibung für einen elektronischen Schaltkreis auf dem elektronischen FPGA-Bauteil,
b) Erzeugen einer ersten Konfiguration für das elektronische FPGA-Bauteil aus der Funktions-Beschreibung, welcher auf programmierbaren Look-Up-Tables, LUTs, aufbaut,
c) Bestimmen des zeitlichen Verlaufs einer ersten Stromaufnahme der ersten Konfiguration über eine vorgegebene Betriebsdauer des elektronischen Schaltkreises,
d) Erzeugen einer zweiten Konfiguration für das elektronische FPGA-Bauteil, welche auf LUTs aufbaut, wobei die zweite Konfiguration konfiguriert ist, einen zeitlichen Verlauf einer zweite Stromaufnahme zu erzeugen, welche über den zeitlichen Verlauf zur ersten Stromaufnahme der ersten Konfiguration über die vorgegebene Betriebsdauer des elektronischen Schaltkreises komplementär ist, und die Summe über die erste und zweite Stromaufnahme über die vorgegebene Betriebsdauer des elektronischen Schaltkreises in den jeweiligen einzelnen Stromwerten in deren zeitlichen Verlauf konstant ist.
e) Erzeugen des elektronischen Schaltkreises auf dem elektronischen FPGA-Bauteil, umfassend die erste und die zweite Konfiguration.

Dadurch wird erreicht, dass ein FPGA gegen DPA-Angriffe aufgrund gleichmäßiger Stromaufnahme bei sicherheitsrelevanten Funktionen auf einfache und effiziente Weise besser geschützt ist.

Um eine möglichst gleichmäßige Stromaufnahme der sicherheitsrelevanten Funktionen n einem FPGA zu erreichen, wird somit eine komplementäre Funktion als Härtung gegen DPA-Angriffe hinzugefügt.

Dafür wird die zu härtende Schaltung auf ihre kleinstmöglichen logischen Elemente im FPGA heruntergebrochen und unabhängig voneinander und ohne Kenntnisse der Gesamtfunktion ein komplementäres logisches Element mit inverser Stromaufnahme abgeleitet.

In den heutigen FPGAs sind die logisch programmierbaren Elemente, auch als Logik-Module bezeichnet, beispielsweise in "slices" beim Hersteller Xilinx / AMD, oder als "adaptive logic modules" (kurz "ALMs"), beim Hersteller Altera / Intel angeordnet, welche aus zwei identischen Bereichen, einem ersten, oberen Bereich, und einem zweiten, unteren Bereich mit je einem "Lookup Table", kurz LUT, und dazugehörigen Registern bestehen und daher als paarweise LUT-Element-Anordnung bezeichnet werden kann.

Das elektronische FPGA-Bauteil weist somit paarweise LUT-Elemente innerhalb eines Logik-Moduls oder Basis-Blocks auf, wobei im Allgemeinen die beiden Bereiche separat oder in Kombination verwendet werden können.

Durch sogenannte "Lock Constraints" kann man die Entwickler-Tools dazu veranlassen, nur den oberen Bereich zu nutzen und den unteren Bereich für die komplementäre Funktion vorläufig freizulassen.

Für jedes zu härtende LUT wird ein komplementäres LUT mit inverser Stromaufnahme für dieselben Eingangsdaten abgeleitet.

Die Bestimmung der Stromaufnahme des zu härtenden LUTs kann beispielsweise durch eine Schätzung der LUT- und Register-Nutzung, oder auch durch Abfrage von in eine Referenz-Datenbank hinterlegten Schaltungen mit bekannter, gemessener Stromaufnahme, oder durch Anwendung eines neuronalen Netzwerks, welches beispielsweise mit gemessenen Stromaufnahmen bekannter FPGA-Schaltungen trainiert wurde, erfolgen.

Das komplementäre LUT kann nachträglich in die bestehende Netzliste auf dem freigelassenen unteren Bereich des Slice/ALM hinzugefügt werden, wobei in Summe hat jeder gehärtete Slice/ALM-Block oder jedes Logik-Modul S/ALM unabhängig von den Eingangsvektoren somit annähernd dieselbe Stromaufnahme aufweist.

Da die beschriebene LUT-Härtung in Summe dauerhaft mehr Strom und Ressourcen benötigt, ist es vorteilhaft, nur die sicherheitsrelevanten Funktionen im FPGA bei der Härtung zu berücksichtigen.

Durch die Erfindung ist es möglich, auf einfache Weise eine Härtung eines FPGA durchzuführen, da keine spezifischen Vorkenntnisse hinsichtlich einer Erzeugung einer dementsprechend angepassten Konfiguration und deren Implementierung in einen Code für die Härtung notwendig sind.

Ferner ist es vorteilhaft, dass die Härtung des FPGA auf einzelne Funktionen der Schaltung beschränkt werden kann, und diese Festlegung erst bei einer Synthese im Entwicklungsprozess erfolgen kann.

Außerdem ist es günstig, wenn ein einzelnes zu härtendes LUT-Element individuell betrachtet werden kann, wodurch die Ausnutzung der bestehenden Slice-/ ALM-Struktur im FPGA optimiert werden kann.

Die Bestimmung der Stromaufnahme kann erfolgen, ohne die Funktion des LUT-Elements näher verstehen zu müssen, was die Implementierung der Härtung erheblich vereinfacht, beispielsweise mit Hilfe von Leistungs-/Stromschätzung, Referenz Datenbanken und künstlicher Intelligenz.

In einer Weiterbildung der Erfindung ist es vorgesehen, dass das elektronische FPGA-Bauteil paarweise LUT-Basis-Elemente innerhalb eines einzigen Logik-Moduls umfasst, wobei das funktionale LUT-Basis-Element die erste Konfiguration mit der ersten Stromaufnahme bildet, und das komplementäre LUT-Basis-Element die zweite Konfiguration mit der komplementären zweiten Stromaufnahme bildet.

Durch die Implementierung des komplementären zweiten Basis-Elements in demselben Logik-Modul S/ALM des FPGA-Halbleiter-Bauelements, welches dem ersten Basis-Elements zugeordnet ist, kann erreicht werden, dass die Härtung besonders genau erfolgt, indem die Stromaufnahme des ersten Basis-Elements besonders genau durch das zweite Basis-Element kompensiert werden kann, da keine zusätzlichen Signallaufzeiten zu anderen LUTs des FPGA-Halbleiter-Bauelements vorliegen.

In einer Weiterbildung der Erfindung ist es vorgesehen, dass das Bestimmen der ersten Stromaufnahme der ersten Konfiguration mithilfe einer Schätzung einer Schaltungssimulation der ersten Konfiguration erfolgt.

Dadurch kann die Stromaufnahme auf besonders einfache Weise erfolgen, da in vielen Fällen eine Simulation zur Verifikation der gewünschten FPGA-Funktion erfolgt.

In einer Weiterbildung der Erfindung ist es vorgesehen, dass die vorgegebene Betriebsdauer so gewählt ist, dass die erste Stromaufnahme der ersten Konfiguration über die Betriebsdauer des elektronischen Schaltkreises konstant ist.

Dadurch kann das komplementäre LUT auf besonders einfache Weise implementiert werden.

Die erfindungsgemäße Aufgabe wird auch durch ein elektronisches Bauteil mit verbesserter Abhörsicherheit gelöst, umfassend einen elektronischen Schaltkreis, welcher mit dem erfindungsgemäßen Verfahren erzeugt wurde.

In den nachfolgenden Figuren ist die Erfindung anhand von Ausführungsbeispielen näher dargestellt. Die Figuren zeigen in
- Fig. 1: ein Ausführungsbeispiel eines Tool-Flows für einen zu härtenden LUTs in einem FPGA,
- Fig. 2: ein Ausführungsbeispiel für die Stromaufnahme eines LUT, mit und ohne Härtung,
- Fig. 3: ein Ausführungsbeispiel für ein Ablaufdiagramm des erfindungsgemäßen Verfahrens.

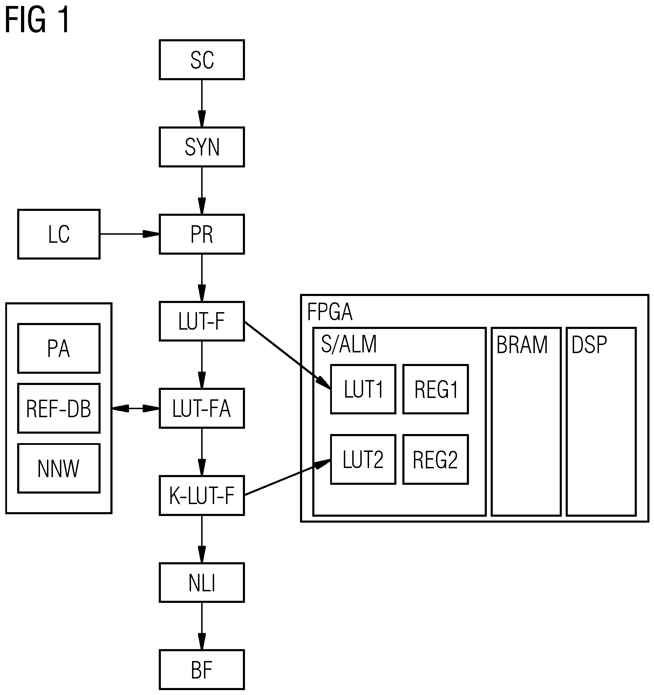

**Fig. 1** zeigt ein Ausführungsbeispiel eines Tool-Flows für einen zu härtenden LUTs in einer programmierbare Logik-Anordnung, dem Halbleiter-Bauelement FPGA. Zunächst wird ein Quellcode SC bereitgestellt, welcher die gewünschte Funktion definiert, die in einem FPGA implementiert werden soll.

Dann erfolgt eine Synthese SYN des Quellcodes SC mit FPGA-Entwicklungs-Bibliotheken, um die Funktion in eine Logik-Schaltung abzubilden.

Die Logik-Elemente der Logik-Schaltung werden im nächsten Schritt PR platziert und verbunden, wobei beispielsweise mithilfe von festgelegte Vorbedingungen LC festgelegt werden kann, welche Basis-Elemente verwendet werden oder nicht verwendet werden.

Anschließend werden die Basis-Elemente, die LUTs, des Halbleiter-Bauelements FPGA konfiguriert und die LUT-Funktion LUT-F gebildet, gemäß der Logik-Schaltung, in diesem Beispiel das erste Basis-Element LUT1.

Dann erfolgt eine LUT-Funktionsanalyse LUT-FA, bei welcher die Stromaufnahme des ersten Basis-Elements LUT1 ermittelt wird, was beispielsweise durch eine Schätzung der Strom- oder Leistungsaufnahme PA, eine Abfrage der Stromaufnahme in einer Referenz-Datenbank REF-DB, oder durch Anwendung eines entsprechenden neuronalen Netzwerks NNW erfolgen kann.

Das Ergebnis der Stromaufnahme des ersten Basis-Elements LUT1 wird angewendet, um eine komplementäre LUT-Funktionsanalyse K-LUT-F durchzuführen, bei welcher ein weiteres, zweites Basis-Element LUT2 im FPGA erzeugt wird, welches zur Stromaufnahme des ersten Basis-Elements LUT1 eine komplementäre Stromaufnahme aufweist.

Durch die Implementierung des komplementären zweiten Basis-Elements LUT2 in demselben Logik-Modul S/ALM des Halbleiter-Bauelements FPGA, welches dem ersten Basis-Elements LUT1 zugeordnet ist, kann erreicht werden, dass die Härtung besonders genau erfolgt, indem die Stromaufnahme des ersten Basis-Elements LUT1 besonders genau durch das zweite Basis-Element LUT2 kompensiert werden kann, da keine zusätzlichen Signallaufzeiten zu anderen LUTs des Halbleiter-Bauelements FPGAs vorliegen.

Die Basis-Elemente LUT1 und LUT2 weisen ferner jeweilige Register, ein erstes Register REG1 beziehungsweise ein zweites Register REG2 auf.

Das Halbleiter-Bauelement FPGA umfasst außerdem meist einen Block-Speicher BRAM und einen digitalen Signalprozessor DSP.

Das so ermittelte komplementäre zweite Basis-Element LUT2 wird nun zusammen mit dem ersten Basis-Element LUT1 im Schritt NLI in eine Netzliste integriert und eine entsprechende Konfigurationsdatei BF erzeugt, mit welcher das Halbleiter-Bauelement FPGA konfiguriert beziehungsweise programmiert werden kann.

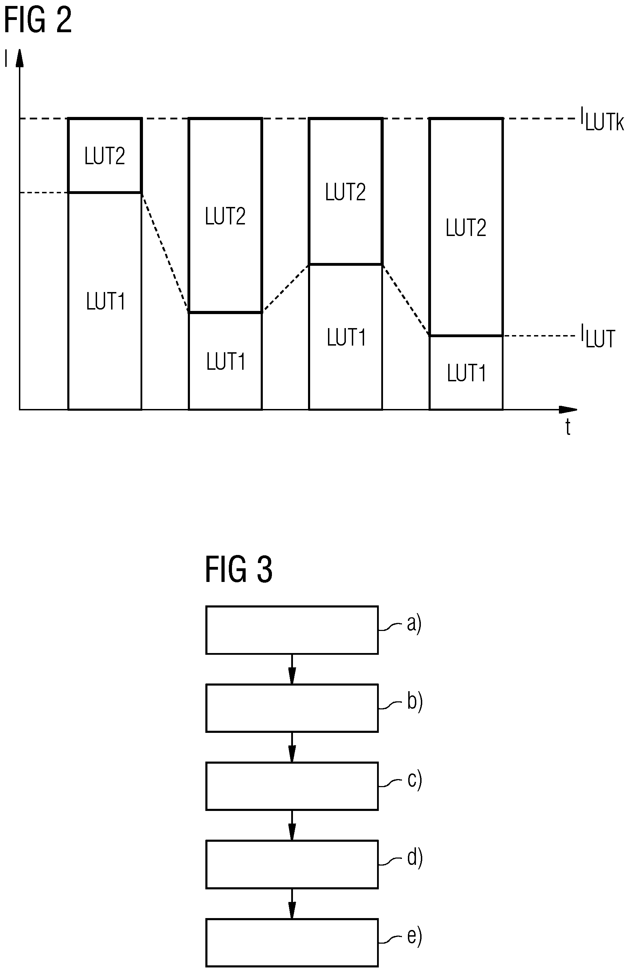

**Fig. 2** zeigt ein Ausführungsbeispiel für den zeitlichen Verlauf der Stromaufnahme I eines LUT, mit und ohne Härtung, wobei die Stromaufnahme bevorzugt aus zeitdiskreten Werten ermittelt wird.

Das erste Basis-Element LUT1 weist eine erste Stromaufnahme I_{LUT} auf.

Das zweite Basis-Element LUT2 weist eine komplementäre, zweite Stromaufnahme I_{LUTk} auf.

Die Summe der ersten und der zweiten Stromaufnahme ist über die Zeit t konstant, wodurch die gewünschte Härtung des erste Basis-Elements LUT1 erzielt wird.

**Fig. 3** zeigt ein Ausführungsbeispiel für ein Ablaufdiagramm des erfindungsgemäßen Verfahrens zur Erzeugung eines elektronischen FPGA-Bauteils FPGA mit verbesserter Abhörsicherheit, wobei folgende Schritte ausgeführt werden:
a) Bereitstellen einer Funktions-Beschreibung für einen elektronischen Schaltkreis auf dem elektronischen FPGA-Bauteil FPGA,
b) Erzeugen einer ersten Konfiguration für das elektronische FPGA-Bauteil FPGA aus der Funktions-Beschreibung, welcher auf programmierbaren Look-Up-Tables, LUTs, nämlich LUT1 und LUT2, aufbaut,
c) Bestimmen des zeitlichen Verlaufs einer ersten Stromaufnahme I_{LUT} der ersten Konfiguration über eine vorgegebene Betriebsdauer des elektronischen Schaltkreises,
d) Erzeugen einer zweiten Konfiguration für das elektronische FPGA-Bauteil FPGA, welche auf LUTs aufbaut, wobei die zweite Konfiguration konfiguriert ist, einen zeitlichen Verlauf einer zweite Stromaufnahme I_{LUTk} zu erzeugen, welche über den zeitlichen Verlauf zur ersten Stromaufnahme I_{LUT} der ersten Konfiguration über die vorgegebene Betriebsdauer des elektronischen Schaltkreises komplementär ist, und die Summe über die erste und zweite Stromaufnahme I_{LUT}, I_{LUTk} über die vorgegebene Betriebsdauer des elektronischen Schaltkreises in den jeweiligen einzelnen Stromwerten in deren zeitlichen Verlauf konstant ist.
e) Erzeugen des elektronischen Schaltkreises auf dem elektronischen FPGA-Bauteil FPGA, umfassend die erste und die zweite Konfiguration.

Das elektronische FPGA-Bauteil FPGA umfasst dabei paarweise LUT-Basis-Elemente LUT1, LUT2 innerhalb eines einzigen Logik-Moduls S/ALM, welche die funktionalen LUT- Basis-Elemente, welche die erste Konfiguration mit der ersten Stromaufnahme I_{LUT} bilden, als auch die komplementären LUT-Basis-Elemente, welche die zweite Konfiguration mit der komplementären zweiten Stromaufnahme I_{LUTk} bilden.

Das elektronische FPGA-Bauteil FPGA umfasst dabei paarweise LUT-Basis-Elemente LUT1, LUT2 innerhalb eines einzigen Logik-Moduls S/ALM.

Das funktionale LUT-Basis-Element LUT1 bildet die erste Konfiguration mit der ersten Stromaufnahme (I_{LUT}).

Das komplementäre LUT-Basis-Element LUT2 bildet die zweite Konfiguration mit der komplementären zweiten Stromaufnahme I_{LUTk}.

Das Bestimmen der ersten Stromaufnahme I_{LUT} der ersten Konfiguration erfolgt beispielsweise mithilfe einer Schätzung einer Schaltungssimulation der ersten Konfiguration.

*Unabhängig vom grammatikalischen Geschlecht eines bestimmten Begriffes sind Personen mit männlicher, weiblicher oder anderer Geschlechteridentität mit umfasst.*

### Bezugszeichenliste

- BF: Datei (engl. "bitfile")
- BRAM: Block-Speicher (engl. "block random access memory")
- DSP: digitaler Signalprozessor
- FPGA: programmierbare Logik-Anordnung, FPGA-Bauteil
- I, I_{LUT}, I_{LUTk}: Stromaufnahme
- K-LUT-F: komplementäre LUT-Funktionsanalyse
- LC: festgelegte Vorbedingungen (engl. "lock constraints")
- LUT1, LUT2: FPGA-Basiselement
- LUT-F: LUT Funktion
- LUT-FA: LUT-Funktionsanalyse
- NLI: Integration der Netzliste
- NNW: neuronales Netzwerk
- PA: Schätzung der Strom-/Leistungsaufnahme
- PR: Platzieren und Verbinden (engl. "place and route"
- REF-DB: Referenz-Datenbank
- REG1/REG2: FPGA-Basisregister
- S/ALM: Logik-Modul (engl. "slice/ adaptive logic module")
- SC: Quellcode (engl. "source code")
- SYN: Synthese
- t: Zeit

## Patentansprüche

1. Verfahren zur Erzeugung eines elektronischen FPGA-Bauteils (FPGA) mit verbesserter Abhörsicherheit, wobei folgende Schritte ausgeführt werden:
a) Bereitstellen einer Funktions-Beschreibung für einen elektronischen Schaltkreis auf dem elektronischen FPGA-Bauteil (FPGA),
b) Erzeugen einer ersten Konfiguration für das elektronische FPGA-Bauteil (FPGA) aus der Funktions-Beschreibung, welcher auf programmierbaren Look-Up-Tables, LUTs, (LUT1, LUT2) aufbaut,
c) Bestimmen des zeitlichen Verlaufs einer ersten Stromaufnahme (ILUT) der ersten Konfiguration über eine vorgegebene Betriebsdauer des elektronischen Schaltkreises,
d) Erzeugen einer zweiten Konfiguration für das elektronische FPGA-Bauteil (FPGA), welche auf LUTs aufbaut, wobei die zweite Konfiguration konfiguriert ist, einen zeitlichen Verlauf einer zweite Stromaufnahme (ILUTk) zu erzeugen, welche über den zeitlichen Verlauf zur ersten Stromaufnahme (ILUT) der ersten Konfiguration über die vorgegebene Betriebsdauer des elektronischen Schaltkreises komplementär ist, und die Summe über die erste und zweite Stromaufnahme (ILUT, ILUTk) über die vorgegebene Betriebsdauer des elektronischen Schaltkreises in den jeweiligen einzelnen Stromwerten in deren zeitlichen Verlauf konstant ist.
e) Erzeugen des elektronischen Schaltkreises auf dem elektronischen FPGA-Bauteil (FPGA), umfassend die erste und die zweite Konfiguration.

2. Verfahren nach dem vorhergehenden Anspruch, wobei das elektronische FPGA-Bauteil (FPGA) paarweise LUT-Basis-Elemente (LUT1, LUT2) innerhalb eines einzigen Logik-Moduls (S/ALM) umfasst, wobei das funktionale LUT-Basis-Element (LUT1) die erste Konfiguration mit der ersten Stromaufnahme (I_{LUT}) bildet, und das komplementäre LUT-Basis-Element (LUT2) die zweite Konfiguration mit der komplementären zweiten Stromaufnahme (I_{LUTk}) bildet.

3. Verfahren nach einem der vorhergehenden Ansprüche, wobei das Bestimmen der ersten Stromaufnahme (I_{LUT}) der ersten Konfiguration mithilfe einer Schätzung einer Schaltungssimulation der ersten Konfiguration erfolgt.

4. Verfahren nach einem der vorhergehenden Ansprüche, wobei die vorgegebene Betriebsdauer so gewählt ist, dass die erste Stromaufnahme (I_{LUT}) der ersten Konfiguration über die Betriebsdauer des elektronischen Schaltkreises konstant ist.

5. Elektronisches Bauteil mit verbesserter Abhörsicherheit, umfassend einen elektronischen Schaltkreis, welcher mit dem Verfahren nach einem der vorhergehenden Schritte erzeugt wurde.
